# EUROPEAN PATENT APPLICATION

(11) **EP 4 141 516 A1**
(43) Date of publication of application: **01.03.2023**
(21) Application number: 21793206.0
(22) Date of filing: 19.04.2021
(51) Int. Cl.: G02B 27/01, B60K 35/00

(54) **VEHICULAR DISPLAY DEVICE**

(30) Priority: 24.04.2020 JP 2020077022
(71) Applicant: KOITO MANUFACTURING CO., LTD., Minato-ku, Tokyo, 108-8711 (JP)
(72) Inventor: TOYOSHIMA, Takanobu, Shizuoka-shi, Shizuoka 424-8764 (JP); SUGAWARA, Kazuhiro, Shizuoka-shi, Shizuoka 424-8764 (JP); NAKANO, Yuji, Shizuoka-shi, Shizuoka 424-8764 (JP)
(74) Representative: Zimmermann, Tankred Klaus
(86) International application number: PCT/JP2021/015882
(87) International publication number: WO 2021/215400

(57) **Abstract**

Provided is a vehicle display device that can suitably display a plurality of images and achieves reduction in size of an image display unit. The vehicle display device includes an image display unit 2 including a plurality of pixels 24 for displaying an image on an image display surface 23 and causes an optical system (3) to project image light beams of the displayed image onto a windshield (WS) of a vehicle so as to make a virtual image of the image visually recognizable by using light reflected by the windshield. The image display unit 2 includes a prism sheet 22 disposed on the image display surface 23, and the prism sheet 22 includes a plurality of microprisms 26 that is arranged to face the plurality of pixels 24 forming one image and that individually deflects the image light beams emitted from the pixels 24.

## Description

### TECHNICAL FIELD

The present invention relates to a display device mounted on a vehicle such as an automobile, and more particularly to a head-up display device (hereinafter, the HUD device).

### BACKGROUND ART

As the HUD device, there has been proposed a device that projects light forming an image onto a windshield of an automobile so that an occupant such as a driver can visually recognize a virtual image of the image with reflected light thereof. Hereinafter, making a virtual image visually recognizable will also be referred to as displaying an image. There has also been proposed an HUD device that can display a plurality of images. For example, Patent Literature 1 proposes an HUD device that emits light beams of a plurality of images (hereinafter, image light beams) displayed on an image display unit including a liquid crystal display (hereinafter, a liquid crystal device), in different directions by using an optical element, thereby independently displaying each image.

That is, in the technique of Patent Literature 1, the optical element including a light guide is disposed on a display surface of the image display unit, and an emission surface from which image light beams are emitted through the optical element is inclined, whereby the image light beams emitted from the display surface of the image display unit are refracted. Then, angles of refraction, that is, directions of deflection of the plurality of image light beams are made different, and thus each image is displayed.

### CITATION LIST

### PATENT LITERATURE

PATENT LITERATURE 1: JP-A-2018-173589

### SUMMARY OF THE INVENTION

### PROBLEMS TO BE SOLVED BY THE INVENTION

In the technique of Patent Literature 1, the emission surface of the light guide forming the optical element is formed as one continuous inclined surface corresponding to an image. Therefore, when a plurality of images is displayed by using such an optical element, each image to be displayed can be inclined and shifted in a depth direction. However, at a boundary of a prism that creates a plurality of image light beams, an image light space spreading considerably from the image display unit becomes uncontrollable light. This tends to reduce quality of a virtual image.

This problem particularly tends to occur in a case where display images are close to each other. However, in order to increase an interval between a plurality of images to be displayed, a large image display unit is required. This leads not only to an increase in cost but also to an increase in an angle of deflection of image light. This also leads to an increase in an angle of inclination of the emission surface. Therefore, a dimension of the optical element in an optical axis direction is increased to increase a thickness dimension of the optical element, and thus a thickness dimension of the image display unit including the optical element is also increased.

An object of the present invention is to provide a vehicle display device that displays a plurality of images without inclining the images and includes a thinned image display unit to achieve reduction in size.

### SOLUTION TO THE PROBLEMS

The present invention is a vehicle display device including: an image display unit including a plurality of pixels for displaying an image on an image display surface; and an optical system that projects image light beams of the displayed image onto a windshield of a vehicle, the vehicle display device making a virtual image of the image visually recognizable by using light reflected by the windshield. The image display unit includes a prism sheet disposed on the image display surface, and the prism sheet includes a plurality of microprisms that is disposed to face the plurality of pixels forming the one image and that individually deflects the image light beams emitted from the pixels.

In the present invention, the optical system includes a concave mirror that reflects the image light beams emitted from the image display unit toward the windshield. Further, the image display unit is capable of displaying a plurality of images on the image display surface, and the microprisms deflect image light beams at the same angle for the same image and deflect image light beams at a different angle for a different image. It is preferable that the microprisms in the same image region deflect the image light beams at a certain same angle and that the microprisms in another image region different from the image region deflect the image light beams at another same angle in the another image region, the another same angle being different from the certain same angle.

As a preferred form of the present invention, the plurality of pixels on the image display surface is arranged in a matrix, and each of the plurality of microprisms is arranged to face one column of the pixels or a plurality of columns of the pixels. Alternatively, the pixel of the image display surface includes a plurality of subpixels, and the microprisms are arranged to face the subpixels. Further, a deflection angle of the microprisms disposed in a region away from an optical axis of the optical system is larger than a deflection angle of the microprisms disposed in a region close to the optical axis.

In the present invention, it is preferable that the plurality of microprisms be integrally formed on the same prism sheet. It is also preferable that the microprisms include an optical layer that radiates or diffuses light on an emission surface from which the image light beams are emitted.

### EFFECTS OF THE INVENTION

According to the present invention, the image light beams emitted from the plurality of pixels are individually deflected by the microprisms of the prism sheet disposed on the image display surface. This makes it possible to control a direction of the image light beams projected onto the windshield to control an image to be displayed. Therefore, there is provided the vehicle display device that displays the plurality of images in a suitable state and achieves reduction in size of the image display unit.

### BRIEF DESCRIPTION OF THE DRAWINGS

Fig. 1 is a conceptual configuration diagram of an HUD device.
Fig. 2 is a schematic view of the HUD device as viewed from the side.
Fig. 3 is an exploded perspective view of a schematic configuration of an image display unit.
Fig. 4 is a cross-sectional view of a schematic configuration of the image display unit.
Fig. 5 is a schematic plan view for describing a form of image display.
Fig. 6 is a cross-sectional view of a schematic configuration of a first modification example of the image display unit.
Fig. 7 is a cross-sectional view of a schematic configuration of a second modification example of the image display unit.
Fig. 8 is a cross-sectional view of a schematic configuration of a third modification example of the image display unit.
Fig. 9 is a cross-sectional view of a schematic configuration of a second embodiment of the image display unit.
Fig. 10 is a schematic optical path diagram for describing an operation of the second embodiment.

### DESCRIPTION OF THE EMBODIMENTS

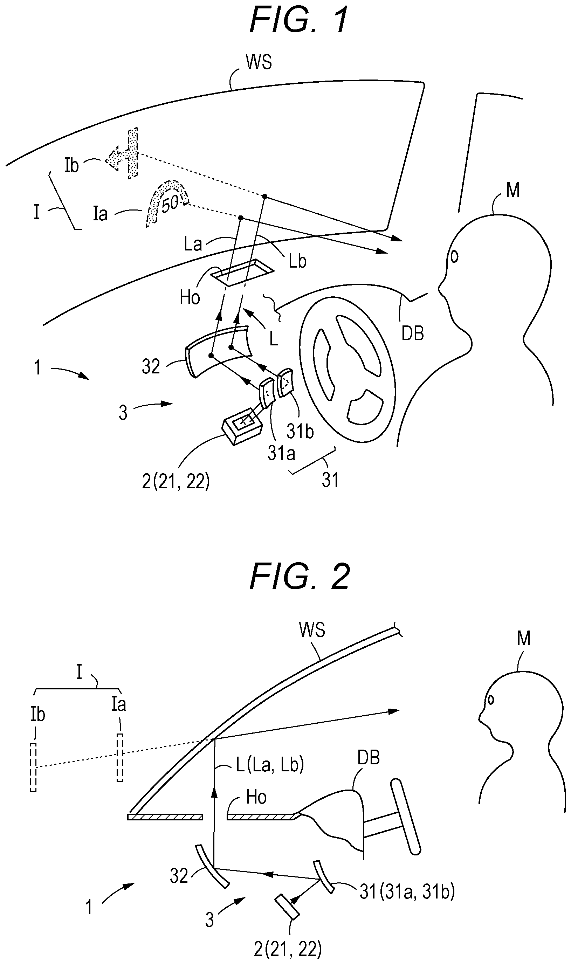

Next, embodiments of the present invention will be described with reference to the drawings. Fig. 1 is a conceptual configuration diagram of an HUD device applied to an automobile. An HUD device 1 is disposed in a dashboard DB of the automobile, and image light L emitted from the HUD device 1 is projected onto a windshield WS of the automobile through an upper surface opening Ho of the dashboard. The projected image light L is reflected by the windshield WS and is directed to an occupant M such as a driver of the automobile. When the image light L enters eyes of the occupant M, the occupant M can visually recognize a virtual image I of the image light in front of the automobile through the windshield WS. Thus, the image is displayed.

The HUD device 1 includes an image display unit 2 and an optical system 3 that projects an image displayed on the image display unit 2 onto the windshield WS. The image display unit 2 can display a plurality of images, here, two images. The optical system 3 projects image light beams of the two images displayed on the image display unit 2 onto the windshield WS at different angles, respectively. Therefore, a plurality of image light beams L reflected by the windshield enters the eyes of the occupant M, and the occupant M can visually recognize a plurality of virtual images Ia and Ib.

That is, an image light beam La and an image light beam Lb of the two independent images displayed on the image display unit 2 are projected onto the windshield WS in respective optical paths aligned in a horizontal direction. The image light beams La and Lb are variously affected by being reflected by a convex mirror 31 and a concave mirror 32 of the optical system 3 and further by the windshield WS, and, when the image light beams enter the eyes of the occupant M, the occupant can visually recognize the virtual images Ia and Ib of the respective images in desired positions and inclinations. In this example, display is performed such that the virtual image Ia of a speed meter can be visually recognized on a left side through the windshield WS, and the virtual image Ib of navigation can be visually recognized on a right side at a position deeper than that of the virtual image Ia.

Fig. 2 is a schematic view of the HUD device 1 as viewed from a side direction. The optical system 3 includes the first reflection unit 31 that reflects the image light L of the image displayed on the image display unit 2 and the second reflection unit 32 that further reflects the light reflected by the first reflection unit 31 and projects the light onto the windshield WS. The first reflection unit 31 includes a convex mirror, and the second reflection unit 32 includes a concave mirror. Here, the convex mirror 31 includes two convex mirrors 31a and 31b of which reflecting surfaces are different in radius of curvature. The image light beam La is reflected by the convex mirror 31a having a predetermined radius of curvature, and the image light beam Lb is reflected by the convex mirror 3 1b having a radius of curvature larger than that of the convex mirror 31a. In a case where the convex mirror 31a and the convex mirror 31b have the same curvature, the convex mirror 31a may be disposed at a position closer to the image display unit 2 than the convex mirror 3 1b to display the virtual image Ib at a position deeper than the virtual image Ia.

The concave mirror 32 has a spherical surface, aspherical surface, or free-form surface having a curvature that achieves a required focal length. Aberration in the concave mirror 32 is improved by the convex mirror 31, and the focal length of the concave mirror 32 is substantially extended. The HUD device 1 is configured such that the image displayed on the image display unit 2 is placed within the focal length of the concave mirror 32. Therefore, the occupant M can visually recognize the virtual image I of the displayed image.

### (First Embodiment)

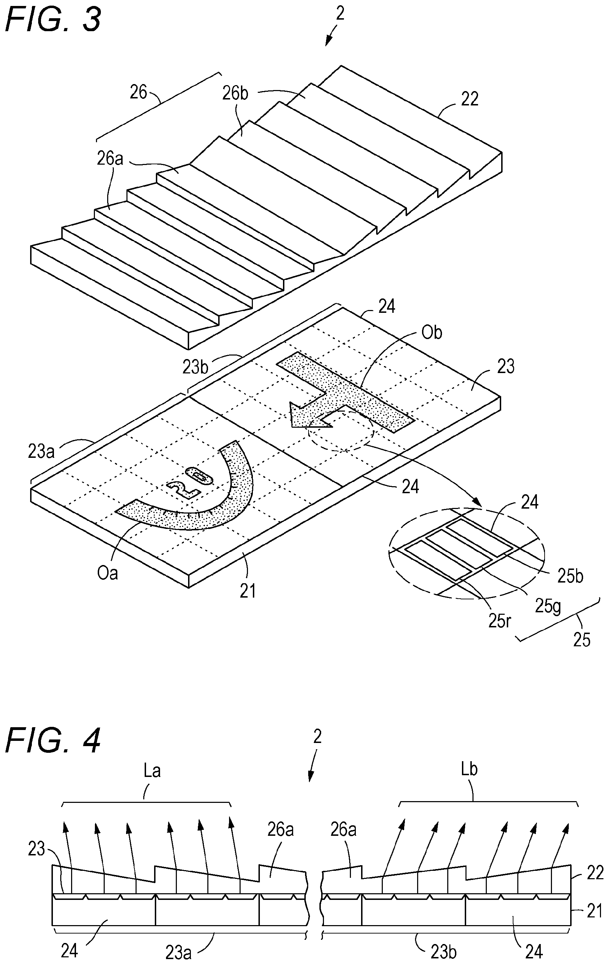

Fig. 3 is an exploded perspective view illustrating a schematic configuration of the image display unit 2 according to a first embodiment. The image display unit 2 includes a liquid crystal device 21 and a prism sheet 22. The liquid crystal device 21 can display a desired image on an image display surface 23 and can be an existing liquid crystal device. Although briefly illustrated in Fig. 3, the liquid crystal device 21 is such that the image display surface 23 includes a large number of pixels 24 arranged in a matrix direction. The image display surface 23 is divided into two regions in a row direction, and an A image Oa is displayed in one A region 23a, whereas a B image Ob is displayed in the other B region 23b. Here, the A image Oa corresponds to the speed meter image, and the B image Ob corresponds to the navigation image.

The liquid crystal device 21 is configured as a color liquid crystal device in which each pixel 24 includes three RGB subpixels 25 (25r, 25g, and 25b), and can therefore display a color image. The subpixels 25 are arranged side by side in the row direction. The plurality of pixels 24 arranged side by side in a column direction is in the same array as the RGB subpixels 25 (25r, 25g, and 25b). Note that the actual pixels 24 have an extremely small size, and the A image Oa and the B image Ob are displayed by the minute pixels 24. However, Fig. 3 illustrates the pixels with a large size in order to describe a correspondence with the prism sheet 22.

The prism sheet 22 includes a sheet made from a material having light transmittance and a refractive index and also having high transferability such as, but not limited to, resin. A large number of wedge-shaped (triangular) microprisms 26 are arrayed and integrally formed on a plane. The microprisms 26 include two types of microprisms each having an emission surface inclined in the row direction, i.e., a plurality of A microprisms 26a and a plurality of B microprisms 26b. The A microprisms 26a and the B microprisms 26b are disposed corresponding to the pixels 24 of the liquid crystal device 21. Here, each microprism is disposed for each column of the pixels 24 arranged in a matrix and forms a so-called lenticular lens. The emission surfaces of the A microprism 26a and the B microprism 26b are formed as inclined surfaces of which inclination angles are the same but inclination directions are opposite in the row direction. Both the microprisms 26a and 26b have the same height dimension, that is, the same thickness dimension.

As Fig. 4 illustrates a cross-sectional configuration of the image display unit 2, the prism sheet 22 has a flat back surface, and the back surface is attached to the image display surface 23 of the liquid crystal device 21 while being in close contact with the image display surface with a predetermined positional relationship. That is, the plurality of A microprisms 26a and the plurality of B microprisms 26b are attached to the pixels 24 in each column of the liquid crystal device 21 while being positioned with respect to the pixels. Therefore, the image light beams La emitted from a pixel group of the A region 21a are refracted by the A microprisms 26a outward (leftward in Fig. 4) with respect to the center and are emitted from the emission surfaces. The image light beams Lb emitted from a pixel group of the B region 21b are refracted by the B microprisms 26b outward (rightward in Fig. 4) with respect to the center and are emitted from the emission surfaces. However, in a case where a distance between the image light beams La and Lb increases as the image light beams travel from the microprisms toward the convex surfaces, only either the image light beams La or the image light beams Lb may be directed outward.

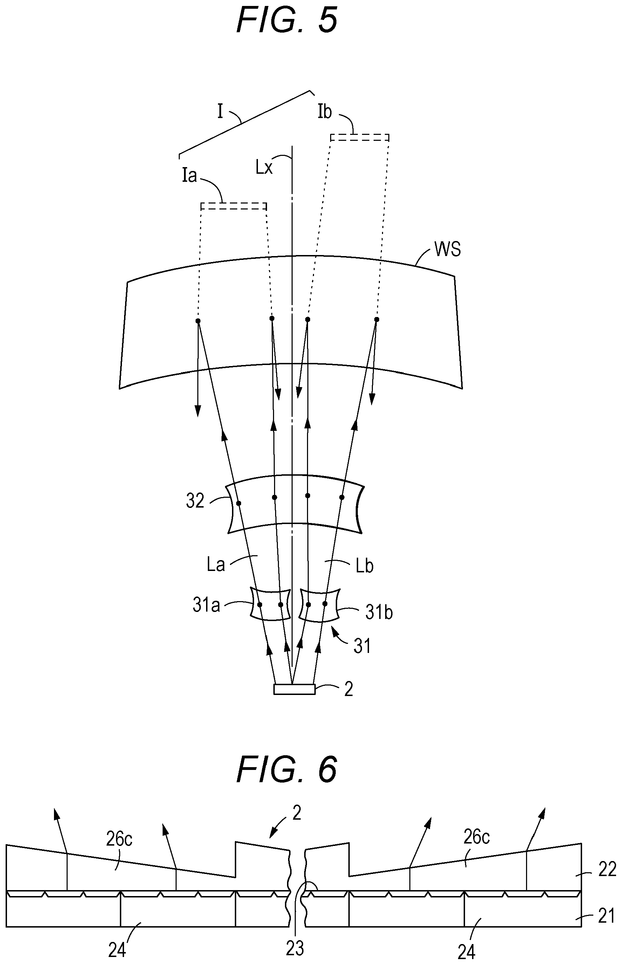

Fig. 5 is a schematic plan view for describing a form of image display in the HUD device 1. When the A image and the B image are displayed on the image display unit 2, as illustrated in Fig. 4, the image light beams La of the A image Oa (hereinafter, the A image light beams) are deflected leftward with respect to the optical axis by the A microprisms 26a, and the image light beams Lb of the B image Ob (hereinafter, the B image light beams) are deflected rightward with respect to the optical axis by the B microprisms 26b. Note that an optical path through which light emitted vertically from the center of the liquid crystal display surface 23 passes is defined as an optical axis Lx.

The A image light beams La and the B image light beams Lb deflected in opposite directions are reflected by the convex mirrors 31a and 31b, are then reflected by the concave mirror 32, and are thereafter projected onto the windshield WS. Therefore, when those image light beams La and Lb are reflected by the windshield WS and enter the eyes of the occupant, the occupant can visually recognize the A image Oa and the B image Ob, here, the virtual images of the speed meter image and the navigation image, that is, the A virtual image Ia and the B virtual image Ib. Thus, each image is displayed. At this time, the B virtual image Ib is displayed at a position deeper than the A virtual image Ia.

Conventionally, when the image light beams of the A image Oa and the B image Ob to be displayed are displayed on the image display surface 23 while being close to each other in the image display unit 2 including the liquid crystal device 21, the A virtual image Ia and the B virtual image Ib are also displayed while being close to each other. Thus, both the images may not be visually recognized separately. In the HUD device 1, because the prism sheet 22 is disposed on the image display surface 23 of the liquid crystal device 21, the image light beams La and Lb of the images Oa and Ob can be deflected by the prism sheet 22 so as to have a desired angle difference.

Therefore, the A virtual image Ia and the B virtual image Ib can be visually recognized at a desired interval. This makes it possible to perform preferable display. The angle difference can be changed by adjusting an angle of the emission surfaces of the A microprisms 26a or the B microprisms 26b. Therefore, the A virtual image Ia and the B virtual image Ib can be observed in arbitrary directions as viewed from the occupant. For example, directions of the A virtual image Ia and the B virtual image Ib can also be individually set by making the angles of the emission surfaces of the A microprisms 26a and the B microprism 26b different.

The microprisms 26 are formed as one prism sheet 22, and thus, even in a case where the prism sheet is attached to the image display surface 23 of the liquid crystal device 21, a thickness dimension of the liquid crystal device 21, that is, a thickness dimension of the image display unit 2 is increased only by a thickness dimension of the prism sheet 22. Further, one microprism 26 is formed corresponding to one column of the pixels 24 of the liquid crystal device 21, and thus a dimension in the row direction is extremely small. Therefore, even in a case where the inclination angle of the emission surfaces of the microprisms 26 is increased in order to increase a deflection angle of image light, an increase in a thickness dimension of each microprism 26 can be extremely small. Accordingly, the thickness dimension of the prism sheet 22 can also be small, and the thickness dimension of the image display unit 2 is not significantly increased. Thus, a small HUD device is formed.

The microprisms 26 including the A microprisms 26a and the B microprisms 26b can be manufactured as the prism sheet 22 by integral molding using a light-transmissive resin or the like. Thus, the microprisms 26 can be easily manufactured to have the dimensions of the pixels 24 or the subpixels 25. Further, in a case where the prism sheet 22 is positioned with respect to the liquid crystal device 21, the microprisms 26 can be accurately positioned with respect to the corresponding pixels 24. Also from this point, the image display unit 2 can be easily manufactured.

### (First Modification Example)

Fig. 6 is a cross-sectional view of a first modification example of the image display unit 2. Parts equivalent to those in the first embodiment are denoted by the same reference signs. In the first modification example, one microprism 26c of the prism sheet 22 is disposed for each two columns of the pixels 24 of the liquid crystal device 21. That is, one microprism 26c is arranged to face two columns of the pixels 24, and one microprism 26c deflects pixel light of the two columns of the pixels 24 facing the microprism 26c.

In the first modification example, as well as in the first embodiment, the virtual images of the A image and the B image can be visually recognized at a required interval. Further, because the image light is deflected for each two columns of the pixels 24, it is possible to restrain inclination of the virtual images to be visually recognized, as compared with the technique of Patent Literature 1. Furthermore, in a case where the first modification example is applied to a liquid crystal device of the same standard, the number of microprisms 26c formed on the prism sheet 22 can be reduced. Therefore, the prism sheet 22 can be easily manufactured. Meanwhile, in the first modification example, when an inclination angle of emission surfaces of the microprisms 26c increases, a height dimension of the microprisms 26c, that is, the thickness dimension of the prism sheet 22 also increases. Thus, the first modification example is suitable for an HUD device that deflects image light at a relatively small angle.

### (Second Modification Example)

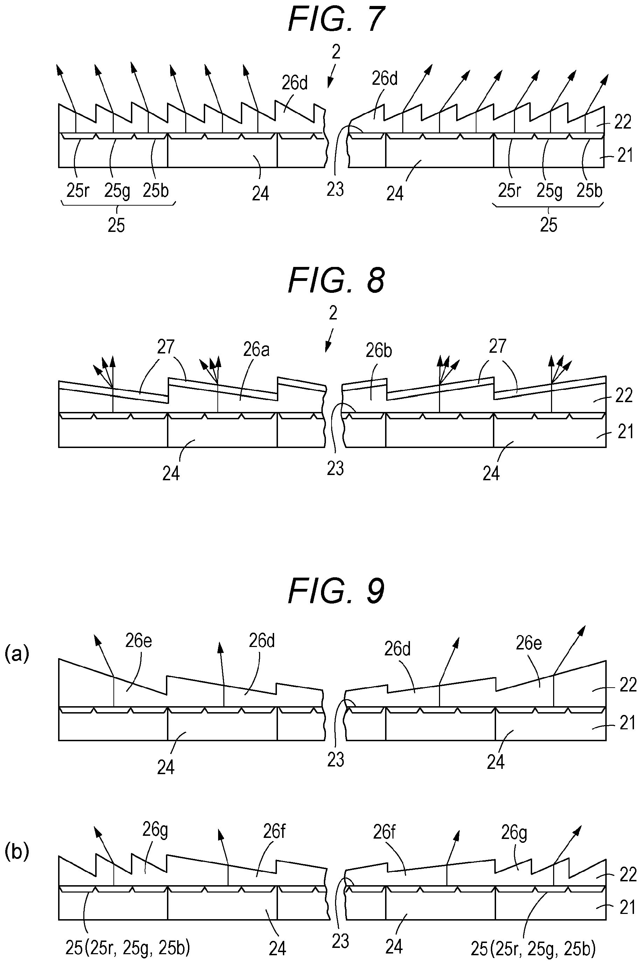

Fig. 7 is a cross-sectional view of a second modification example of the image display unit 2. In this modification example, microprisms 26d are formed in the prism sheet 22 so as to correspond to the three RGB subpixels 25 (25r, 25g, and 25b) included in one pixel 24 of the liquid crystal device 21. That is, image light beams of the three subpixels 25r, 25g, and 25b of one pixel 24 are independently deflected by the microprisms 26d.

Also in the second modification example, the virtual images of the A image and the B image can be observed at a desired interval. Further, because the image light is deflected for each subpixel, it is possible to restrain inclination of the virtual images to be visually recognized. In the second modification example, a dimension in the row direction of the microprisms 26d can be reduced corresponding to a dimension of the subpixel 25, and thus, even in a case where an inclination angle of emission surfaces is increased, it is possible to restrain an increase in a height dimension of the microprisms 26d, that is, an increase in the thickness dimension of the prism sheet 22. Therefore, even in a case where the modification example is applied to an HUD device that requires a larger interval dimension between the virtual images of the A image and the B image, it is possible to prevent an increase in the thickness dimension of the image display unit 2.

### (Third Modification Example)

Fig. 8 is a cross-sectional view of a third modification example of the image display unit 2. In the third modification example, an optical layer 27 that radiates or diffuses image light to be emitted is laminated on the emission surfaces of the A microprisms 26a and the B microprisms 26b of the first embodiment. Alternatively, the optical layer 27 may be formed as a concave lens microprism that radiates light.

In the third modification example, a luminous flux of image light emitted from each of the microprisms 26a and 26b is spread on the optical layer 27. Therefore, even in a case where image light is emitted from only a part of the RGB subpixels 25 in each pixel 24, it is possible to obtain a luminous flux substantially equal to that in a case where image light is emitted from one pixel 24, that is, three subpixels 25r, 25g, and 25b. This makes it possible to visually recognize a virtual image with uniform brightness.

### (Fourth Modification Example)

Although not illustrated, as a fourth modification example, one microprism may be disposed for each pixel of the pixels arranged in a matrix as long as the prism sheet can be finely processed or manufactured. Alternatively, one microprism may be disposed for each subpixel. Conversely, in a case where it is difficult to finely process or manufacture the prism sheet, one microprism may be disposed for each group including a plurality of pixels in the row direction and/or the column direction.

### (Fifth Modification Example)

Although not illustrated, as a fifth modification example, a microprism may be disposed to face only a part of all the pixels included in the image display surface. In this case, image light of the other pixels is not deflected and is emitted in a vertical direction of the image display surface.

### (Sixth Modification Example)

Although not illustrated, as a sixth modification example, the liquid crystal device may display three different images on the image display surface, and the prism sheet may include three different microprisms having different inclination angles, such as A microprisms, B microprisms, and C microprisms. For example, the A microprisms deflect A image light leftward, the B microprisms deflect B image light rightward, and the C microprisms do not deflect C image light. This makes it possible to display three different images side by side in the horizontal direction. The liquid crystal device may display four or more images.

### (Second Embodiment)

By the way, in the HUD device including the liquid crystal device 21 as in the present invention, image light emitted from the image display surface 23 of the liquid crystal device 21 is required to be emitted from the image display surface 23 as a substantially parallel luminous flux in a substantially vertical direction. Therefore, contrast in an image to be displayed may be reduced. That is, as a characteristic of the liquid crystal device 21, in a case where light is obliquely incident on the liquid crystal device 21, the liquid crystal device 21 substantially blocks the light or substantially transmits the light because elements in the liquid crystal device 21 are not in an appropriate positional relationship, and light leakage occurs at that time. When the light leakage occurs, a brightness ratio between white and black that can be displayed by the liquid crystal device, that is, contrast decreases.

In the HUD device 1 of the first embodiment, light emitted from the image display unit 2 is deflected in the same direction in the same display region. However, in a small HUD device that displays a large virtual image, image light is vertically emitted at the center of the image display surface 23, and image light at an end portion thereof spreads outward with respect to the optical axis Lx. Therefore, a virtual image at the end portion is displayed by light traveling obliquely through a liquid crystal, and the contrast decreases due to the above-described liquid crystal characteristic.

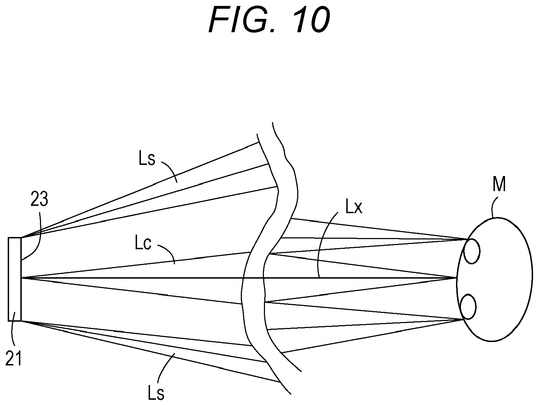

In the second embodiment, as Fig. 10 schematically illustrates an optical path of light emitted from the liquid crystal device 21, in a case where the center of the image display surface 23 of the liquid crystal device 21 is set to the optical axis Lx, an image light beam Lc is vertical at the center of the image display surface 23. The above-described contrast is improved by controlling deflection of image light beams Ls emitted from a region away from the optical axis Lx, that is, a peripheral region away from the center of the image display surface 23. That is, regarding microprisms formed on a prism sheet, an inclination angle of emission surfaces of microprisms corresponding to the peripheral region of the image display surface 23 is made relatively larger than an inclination angle of emission surfaces of microprisms corresponding to the center thereof.

Fig. 9(a) is a cross-sectional view of a first example of the image display unit 2 according to the second embodiment. In the first example, one microprism 26 is disposed for one column of the pixels 24 of the liquid crystal device as in the first embodiment, but an inclination angle of emission surfaces of microprisms 26e in a region away from the optical axis of the image display surface 23 is made larger than an inclination angle of emission surfaces of the microprisms 26d in a region close to the optical axis. With this configuration, a deflection angle of image light emitted from the microprisms 26e in the region away therefrom is increased, but light traveling in a nearly vertical direction through the liquid crystal is used, and thus it is possible to provide high-quality display without causing a decrease in contrast.

In the second embodiment, as in a cross-sectional view of Fig. 9(b), microprisms 26f corresponding to the pixels 24 may be disposed in the region close to the optical axis, and microprisms 26g corresponding to the subpixels 25 (25r, 25g, and 25b) may be disposed in the region away from the optical axis. With this configuration, it is possible to prevent an increase in a height dimension of the microprisms 26g and to prevent an increase in the thickness dimension of the prism sheet 22, as compared with a case where the inclination angle is increased as in the microprisms 26e disposed for the respective pixels as illustrated in Fig. 9(a).

In the embodiments and the modification examples described above, there have been described examples where a plurality of images is displayed side by side in the horizontal direction. However, the present invention can be similarly applied to a case where virtual images are displayed side by side in the vertical direction. In this case, image light may be deflected in the column direction by the microprisms formed on the prism sheet.

In the present invention, the image display unit only needs to emit image light and thus may be formed for an intermediate image in an optical system including a DMD device that includes micromirrors arranged in a matrix to selectively reflect light of a light source and emit image light. Alternatively, the image display unit may be formed as an organic EL. The first reflection unit of the optical system is not limited to the convex mirror and may be a flat mirror. Optical members other than the concave mirror may be omitted as long as a failure such as interference of the HUD device with another device of the automobile does not occur. At least one of the optical systems 3 may be divided into two or more and may be formed as dedicated optical systems for a plurality of images.

The windshield of the present invention is not limited to the windshield of the automobile described in the embodiments and may be a part of a vehicle body, such as a light-transmissive window provided in a vehicle.

The present international application claims priority based on Japanese Patent Application No. 2020-077022 filed on April 24, 2020, and the entire contents of Japanese Patent Application No. 2020-077022 are incorporated herein by reference.

The above description of specific embodiments of the present invention has been presented for the purpose of illustration. The description is not intended to be exhaustive or to limit the present invention to the described forms. It is obvious to those skilled in the art that many modifications and changes can be made according to the above description.

### LIST OF REFERENCE NUMERALS

- 1: HUD device
- 2: Image display unit
- 3: Optical system
- 21: Liquid crystal device
- 22: Prism sheet
- 23: Image display surface
- 24: Pixel
- 25 (25r, 25g, 25b): Subpixel
- 26 (26a, 26b, 26c, 26d, 26e, 26f, 26g): Microprism
- 27: Optical layer
- 31 (31a, 31b): First reflection unit (convex mirror)
- 32: Second reflection unit (concave mirror)
- WS: Windshield
- Oa, Ob: Image
- I, Ia, Ib: Virtual image
- L, La,: Lb Image light, image light beam
- Lx: Optical axis

## Claims

1. A vehicle display device comprising:
an image display unit including a plurality of pixels for displaying an image on an image display surface; and
an optical system that projects image light beams of the displayed image onto a windshield of a vehicle,
the vehicle display device making a virtual image of the image visually recognizable by using light reflected by the windshield,
wherein the image display unit includes a prism sheet disposed on the image display surface, and
the prism sheet includes a plurality of microprisms that is disposed to face the plurality of pixels forming the one image and that individually deflects the image light beams emitted from the pixels.

2. The vehicle display device according to claim 1, wherein
the optical system includes a concave mirror that reflects the image light beams emitted from the image display unit toward the windshield.

3. The vehicle display device according to claim 2, wherein
the image display unit is capable of displaying a plurality of images on the image display surface, and
the microprisms in a same image region deflect the image light beams at a certain same angle, and the microprisms in another image region different from the image region deflect the image light beams at another same angle in the another image region, the another same angle being different from the certain same angle.

4. The vehicle display device according to claim 3, wherein
the plurality of pixels on the image display surface is arranged in a matrix, and
each of the plurality of microprisms is arranged to face one column of the pixels or a plurality of columns of the pixels.

5. The vehicle display device according to claim 3, wherein
the pixel includes a plurality of subpixels, and
the microprisms are arranged to face the subpixels.

6. The vehicle display device according to claim 5, wherein
the microprisms are configured such that a deflection angle of the microprisms arranged to face the pixels is smaller than a deflection angle of the microprisms arranged to face the subpixels.

7. The vehicle display device according to any one of claims 1 to 6, wherein
the microprisms are configured such that a deflection angle of the microprisms disposed in a region away from an optical axis of the optical system is larger than a deflection angle of the microprisms disposed in a region close to the optical axis.

8. The vehicle display device according to any one of claims 1 to 7, wherein
the microprisms include an inclined emission surface that refracts and emits the image light beams and are configured such that an inclination angle of an emission surface of the microprism having a large deflection angle is larger than an inclination angle of an emission surface of the microprism having a small deflection angle.

9. The vehicle display device according to any one of claims 1 to 8, wherein
the plurality of microprisms is integrally formed on a same prism sheet.

10. The vehicle display device according to claim 8 or 9, wherein
the microprisms include an optical layer that radiates or diffuses light on the emission surface from which the image light beams are emitted.
